# FASCICULE DE BREVET EUROPEEN

(11) **EP 4 069 948 B1**
(45) Date de publication et mention de la délivrance du brevet: **13.09.2023**
(21) Numéro de dépôt: 20820507.0
(22) Date de dépôt: 24.11.2020
(51) Int. Cl.: F01D 15/10, F01D 9/06

(54) **MODULE ELECTRIQUE POUR UNE TURBOMACHINE D'AERONEF**
ELEKTRISCHES MODUL FÜR EINE TURBOMASCHINE EINES FLUGZEUGS
ELECTRIC MODULE FOR AN AIRCRAFT TURBOMACHINE

(30) Priorité: 03.12.2019 FR 1913668
(43) Date de publication de la demande: 12.10.2022
(73) Titulaire: SAFRAN AIRCRAFT ENGINES, 75015 Paris (FR)
(72) Inventeur: MILLIER, Vincent François Georges, 77550 MOISSY-CRAMAYEL (FR); GUILLOTEL, Loïc Paul Yves, 77550 MOISSY-CRAMAYEL (FR)
(74) Mandataire: Gevers & Orès
(86) Numéro de dépôt international: PCT/FR2020/052158
(87) Numéro de publication internationale: WO 2021/111060

(56) Documents cités:
- EP-A1- 3 246 528
- EP-A1- 3 553 295
- FR-A1- 2 842 565
- FR-A1- 2 922 265
- GB-A- 1 141 001
- US-A- 3 264 482

## Description

### Domaine technique de l'invention

La présente invention concerne un module électrique pour une turbomachine d'aéronef ainsi qu'un procédé de maintenance de cette turbomachine.

### Arrière-plan technique

L'état de l'art comprend notamment les documents FR-A1-2 842 565, FR-A1-2 896 537 et FR-A1-2 922 265 qui décrivent des turbomachines équipées de machines électriques. L'état de l'art comprend également les documents GB-A-1 141 001, US-A-3 264 482, EP-A1-3 246 528 et EP-A1-3 553 295.

Le monde aéronautique se pose aujourd'hui de nombreuses questions quant à la pertinence d'utiliser des moteurs hybrides pour l'aviation commerciale. L'utilisation de l'énergie électrique est aujourd'hui envisagée non seulement pour répondre à des fonctions de l'aéronef mais également pour électrifier des fonctions de la turbomachine.

Ce constat conduit à étudier des solutions d'architecture moteur hybridée, combinant l'énergie fossile du carburant et l'énergie électrique pour assurer l'entraînement de la partie propulsive (soufflante de la turbomachine) et l'alimentation de certaines fonctions moteurs et/ou aéronef.

Ces architectures peuvent notamment se baser sur une architecture de type à grand taux de dilution et à réducteur, mais aussi à multiple corps (2 ou 3). Dans ces architectures, la turbomachine comprend un corps basse pression et un corps haute pression, chaque corps comportant un arbre reliant un rotor d'un compresseur à un rotor d'une turbine.

Il est connu d'équiper une turbomachine d'aéronef avec une machine électrique. On rappelle qu'une machine électrique est un dispositif électromécanique basé sur l'électromagnétisme permettant la conversion d'énergie électrique par exemple en travail ou énergie mécanique. Ce processus est réversible et peut servir à produire de l'électricité.

Ainsi, suivant l'usage final d'une machine, on utilise les termes de :
- générateur pour désigner une machine électrique produisant de l'énergie électrique à partir d'une énergie mécanique,
- moteur pour une machine électrique produisant une énergie mécanique à partir d'une énergie électrique.

Une machine électrique peut également se comporter en mode moteur comme en mode générateur.

L'intégration d'une machine électrique de forte puissance sur le corps basse pression d'une turbomachine, en particulier de type à grand taux de dilution, s'avère très complexe. Plusieurs zones d'installation sont possibles mais les avantages et les inconvénients de chacune sont nombreux et divers (problème d'intégration mécanique de la machine, tenue en température de la machine, accessibilité de la machine, etc.).

Une solution à ce problème consisterait à intégrer la machine électrique directement en aval de la soufflante de la turbomachine. Cependant, une difficulté serait le raccordement de cette machine au circuit électronique de puissance qui est en général situé à distance de la machine.

L'utilisation de harnais de puissance poserait quelques problèmes techniques dans cet environnement. Les harnais à fort diamètre ont des rayons de cintrage très importants, ce qui ne serait pas compatible avec cet environnement. L'intégration de harnais nécessiterait des supports afin de limiter la transmission de vibrations aux pièces environnantes et leur endommagement.

Par ailleurs, une autre problématique de ce type de machine électrique est sa maintenance et son accès dans un environnement restreint.

La présente invention propose une solution à au moins une partie des problèmes évoqués dans ce qui précède.

### Résumé de l'invention

L'invention propose un module électrique pour une turbomachine d'aéronef, ce module comportant :
- un stator de machine électrique, ce stator ayant une forme annulaire autour d'un axe et étant destiné à entourer un rotor de la machine électrique,
- un élément annulaire de support dudit stator, cet élément comportant une surface annulaire externe configurée pour être balayée par un flux de gaz de la turbomachine, en vue du refroidissement par conduction du stator, caractérisé en ce que ledit élément annulaire comprend :
- un support annulaire qui entoure et recouvre au moins une partie dudit stator et qui est fixé à la périphérie externe du stator, ce support comprenant au moins une bride de fixation à un organe de la turbomachine, cette bride étant située à l'extrémité aval du stator, et
- un capot annulaire qui entoure et recouvre au moins une partie dudit support et qui comprend ladite surface balayée par le flux de gaz.

Dans la présente demande, on entend par module, un assemblage d'éléments qui est configuré pour être fixé de façon simplifié et rapide à un autre module, c'est-à-dire à un autre assemblage de pièces. La modularité d'une turbomachine est avantageuse dans la mesure où elle facilite et donc rend plus économique son montage et son démontage, dans le cadre d'une opération de maintenance par exemple.

Le module selon l'invention représente une partie d'une machine électrique, à savoir la partie comportant le stator de la machine électrique. Ce module est destiné à être fixé à un élément fixe ou de stator de la turbomachine, faisant partie d'un autre module, et à entourer le rotor de la machine électrique qui est également destiné à être fixé à un autre élément ou module, cette-fois-ci de rotor, de la turbomachine. Le module électrique est par exemple fixé à un module comportant un carter d'entrée de la turbomachine, et le rotor de la machine électrique est par exemple fixé à un module de soufflante de la turbomachine.

Le module électrique comprend pour l'essentiel deux parties, à savoir le stator et son élément de support. Cet élément de support est formé par l'assemblage d'un support annulaire et d'un capot qui est destiné à être balayé par un flux de gaz afin de refroidir par conduction le stator de la machine électrique.

Le module selon l'invention peut comprendre une ou plusieurs des caractéristiques suivantes, prises isolément les unes des autres ou en combinaison les unes avec les autres :
- le support comprend une paroi cylindrique recouvrant le stator et reliée par son extrémité aval à ladite bride qui a en section une forme générale en U pour définir un espace annulaire de raccordement électrique dudit stator ;
- le capot comprend à une extrémité amont une surface cylindrique interne configurée pour coopérer avec des léchettes annulaires d'un joint d'étanchéité à labyrinthe ;
- ladite surface balayée par le flux de gaz s'étend sur toute l'étendue longitudinale dudit capot ;
- le capot comprend des orifices orientés sensiblement radialement par rapport à l'axe, ces orifices étant alignés avec des trous taraudés formés dans le support, des vis étant configurées pour être vissées dans les orifices et les trous en vue de la fixation du capot au support ;
- le capot comprend à son extrémité aval une gorge annulaire orientée axialement vers l'aval, en vue de la réception d'un bord périphérique d'un autre organe de la turbomachine.

L'invention propose également une turbomachine d'aéronef, comportant :
- un générateur de gaz ayant un axe longitudinal,
- une soufflante située à une extrémité amont du générateur de gaz et configurée pour tourner autour dudit axe, et
- une machine électrique de forme générale annulaire qui est montée coaxialement en aval de la soufflante, et qui comprend un rotor couplé en rotation à la soufflante, et un module tel que décrit ci-dessus,

la soufflante étant configurée pour générer un flux principal de gaz dont une partie s'écoule dans une veine annulaire primaire du générateur de gaz pour former un flux primaire, et dont une autre partie s'écoule dans une veine annulaire secondaire s'étendant entre le générateur de gaz et le carter de nacelle pour former un flux secondaire,
la veine primaire étant délimitée par une première et une deuxième enveloppes annulaires coaxiales du générateur de gaz, la veine primaire étant traversée par des aubages redresseurs, appelés IGV, de liaison des première et deuxième enveloppes, ainsi que par des bras tubulaires d'un carter d'entrée situé en aval des IGV,
le générateur de gaz comportant une troisième enveloppe annulaire qui entoure coaxialement la deuxième enveloppe,
les deuxième et troisième enveloppes étant reliées ensemble à leurs extrémités amont pour former un bec annulaire de séparation des flux primaire et secondaire.

La présente invention propose ainsi une solution d'intégration d'une machine électrique, un premier avantage étant lié au fait que dans la zone d'intégration de cette machine, idéalement directement en aval de la soufflante et donc en amont du ou des compresseurs, les températures qui y règnent sont relativement faibles et donc optimales pour cette machine. Le rotor de la machine est entraîné par la soufflante et est donc à une vitesse relativement faible en particulier si la turbomachine comporte un réducteur. De plus, la machine est située au plus près des veines d'écoulement des flux et a un diamètre relativement important et peut ainsi produire des puissances importantes par rapport aux machines des technologies antérieures.

La turbomachine selon l'invention peut comprendre une ou plusieurs des caractéristiques suivantes, prises isolément les unes des autres ou en combinaison les unes avec les autres :
- les IGV sont formés d'une seule pièce avec des portions annulaires des première, deuxième et troisième enveloppes, cet ensemble étant configuré pour être fixé audit carter d'entrée ;
- ledit ensemble comprend à sa périphérie externe une bride annulaire de fixation au carter d'entrée, et à sa périphérie interne des bords annulaires, respectivement amont et aval, d'appui et/ou d'engagement ;
- la machine électrique et le carter d'entrée sont fixés à un support annulaire de palier du générateur de gaz, ladite bride étant appliquée et fixée sur le support de palier et/ou sur le carter ;
- la turbomachine comprend un carter de nacelle qui entoure le générateur de gaz, ainsi que des aubages, appelés OGV, de liaison du carter de nacelle à ladite troisième enveloppe annulaire ;
- le carter de nacelle définit une veine secondaire d'écoulement du flux secondaire autour du générateur de gaz ;
- les OGV sont situés en aval des bras IGV et sensiblement au droit des bras tubulaires du carter d'entrée ;
ladite seconde partie s'étend sensiblement au droit d'un des OGV.

La présente invention concerne encore un procédé de maintenance d'une turbomachine telle que décrite ci-dessus, comprenant les étapes consistant à :
- démonter et retirer le rotor de la machine électrique,
- démonter et retirer ledit capot du reste du module électrique,
- démonter et retirer ledit ensemble,
- démonter et retirer le reste du module électrique.

### Brève description des figures

L'invention sera mieux comprise et d'autres détails, caractéristiques et avantages de l'invention apparaîtront à la lecture de la description suivante faite à titre d'exemple non limitatif en référence aux dessins annexés, dans lesquels :
[Fig.1] la figure 1 est une vue schématique en coupe axiale d'une turbomachine d'aéronef à fort taux de dilution et réducteur ;
[Fig.2] la figure 2 est une demi vue schématique partielle en coupe axiale d'une turbomachine d'aéronef selon l'invention équipée d'une machine électrique ;
[Fig.3] la figure 3 est une vue à plus grande échelle d'une partie de la figure 2 et montre un module électrique selon l'invention ;
[Fig.4a-4d] les figures 4a à 4d sont des vues similaires à celle de la figure 3 et illustrent des étapes d'un procédé de maintenance de la turbomachine,
[Fig.5] la figure 5 est une vue schématique en perspective d'une partie de la turbomachine de la figure 2 et illustre l'une des étapes du procédé de maintenance de la turbomachine,
[Fig.6] la figure 6 est une vue schématique en coupe transversale d'un harnais électrique, et
[Fig.7] la figure 7 est une vue schématique en coupe transversale d'un mode de réalisation d'une barre de raccordement électrique.

### Description détaillée de l'invention

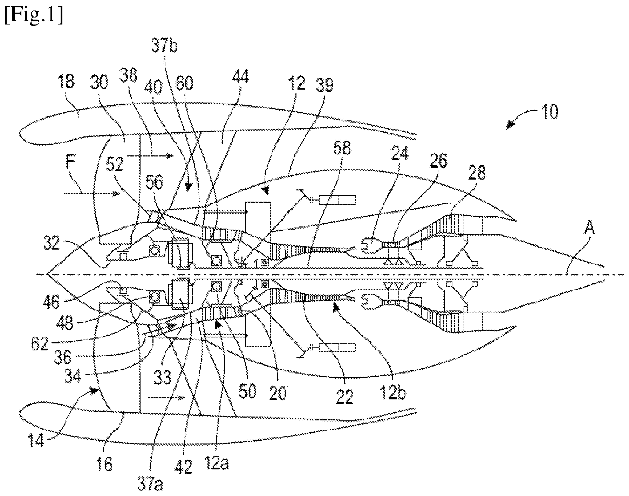

On se réfère d'abord à la figure 1 qui représente schématiquement une turbomachine 10 d'aéronef à double corps et double flux.

La turbomachine 10 comporte de façon classique un générateur de gaz 12 à l'amont duquel est disposée une soufflante 14. La soufflante 14 est entourée par un carter 16 qui est entouré par une nacelle 18 qui s'étend autour et le long d'une majeure partie du générateur de gaz 12.

Le générateur de gaz 12 comprend ici deux corps, à savoir un corps basse pression 12a ou BP et un corps haute pression 12b ou HP. Chaque corps comprend un compresseur et une turbine.

Les termes « amont » et « aval » sont considérés selon une direction principale F d'écoulement des gaz dans la turbomachine 10, cette direction F étant parallèle à l'axe longitudinal A de la turbomachine.

De l'amont vers l'aval, le générateur de gaz 12 comprend un compresseur basse pression 20, un compresseur haute pression 22, une chambre de combustion 24, une turbine haute pression 26 et une turbine basse pression 28.

La soufflante 14 comprend une rangée annulaire d'aubes 30 entraînée en rotation par un arbre de soufflante 32 qui est relié au rotor du corps basse pression 12a par l'intermédiaire d'un réducteur 33. Le flux de gaz qui traverse la soufflante (flèche F) est séparé à l'amont du générateur de gaz 12 par un bec annulaire 34 en un flux annulaire radialement interne, appelé flux primaire 36 qui s'écoule dans une veine annulaire primaire du générateur de gaz 12, et en un flux annulaire radialement externe, appelé flux secondaire 38 qui s'écoule dans une veine annulaire secondaire entre le générateur de gaz 12 et la nacelle 18 et fournit la majeure partie de la poussée de la turbomachine.

Un carter d'entrée 40 relie structurellement le générateur de gaz 12 au carter 16 et à la nacelle 18. Le carter d'entrée 40 comprend une rangée annulaire de bras 42 radialement internes s'étendant dans la veine d'écoulement du flux primaire 36, et une rangée annulaire d'aubages redresseurs 44, appelés OGV (acronyme de *Outer Gear Vane*), radialement externes s'étendant dans la veine d'écoulement du flux secondaire 38.

Les bras 42 sont en général en nombre limités (moins de dix) et sont tubulaires et traversés par des servitudes.

Ces bras 42 ont un rôle structural car ils permettent la transmission d'efforts entre les supports paliers et les suspensions. Ils ont également un rôle de passage des servitudes, permettant de faire traverser les servitudes à travers la veine en les carénant, limitant ainsi les pertes aérodynamiques dans la veine. Ces bras n'ont pas de fonction de redressement de flux car ils n'ont pas de cambrure et ne sont pas en nombre suffisant pour réaliser cette fonction.

Le nombre d'aubages redresseurs 44 (OGV) est en général supérieur à dix. Ils permettent de redresser le flux de la soufflante grâce à un nombre et une cambrure spécifiques. Ils ont également une fonction structurante car ils supportent le carter autour de la soufflante (carter de soufflante).

La veine d'écoulement du flux primaire 36 est en outre traversée par des aubages redresseurs 52, appelés IGV (acronyme de *Inner Gear Vane*)*.* Les IGV 52 sont régulièrement répartis autour de l'axe A et sont situés en amont du carter d'entrée 40 et plus exactement en amont des bras 42. Ces aubages permettent de redresser le flux provenant de la soufflante à son entrée dans la veine primaire. Ils n'ont pas de rôle structural. Ils sont en nombre suffisant (par exemple supérieur à 10) et avec une certaine cambrure pour redresser le flux de la soufflante pénétrant dans la veine primaire.

La veine d'écoulement du flux primaire 36 est délimitée par deux enveloppes annulaires coaxiales, respectivement interne 37a et externe 37b. Les IGV 52 et les bras 42, notamment, sont reliés à ces enveloppes 37a, 37b. La veine d'écoulement du flux secondaire 38 est délimitée intérieurement par une enveloppe annulaire 39 coaxiale aux enveloppes 37a, 37b, et extérieurement par le carter de nacelle 16. Les OGV 44 sont reliés aux enveloppes 37b, 39.

Chacune des enveloppes 37a, 37b, 39 peut être formée par plusieurs parois ou capots adjacents.

Le rotor du corps basse pression 12a ainsi que l'arbre de soufflante 32 sont guidés à l'amont par des paliers 46, 48 et 50. Ces paliers 46, 48, 50 sont du type à billes ou à rouleaux et comprennent chacun une bague interne montée sur l'arbre à guider, une bague externe portée par un support annulaire de paliers et un roulement entre les bagues.

De façon connue, le réducteur 33 est du type à train épicycloïdal et comprend un solaire centré sur l'axe A, une couronne s'étendant autour de l'axe, et des satellites qui engrènent avec le solaire et la couronne et sont portés par un porte-satellites.

Dans l'exemple représenté, la couronne est fixe et reliée fixement à un support 62 des paliers 46, 48. Le porte-satellites est tournant et accouplé par l'arbre de soufflante 32. Le solaire du réducteur est accouplé par un arbre d'entrée 56 à l'arbre principal 58 du corps basse pression.

L'arbre d'entrée 56 est guidé par le palier 50 qui est porté par un support de palier 60. L'arbre de soufflante 32 est guidé par les paliers 46, 48.

Les supports de paliers 60, 62 s'étendent autour de l'axe A et sont des pièces fixes reliées au stator et en particulier au carter d'entrée 40.

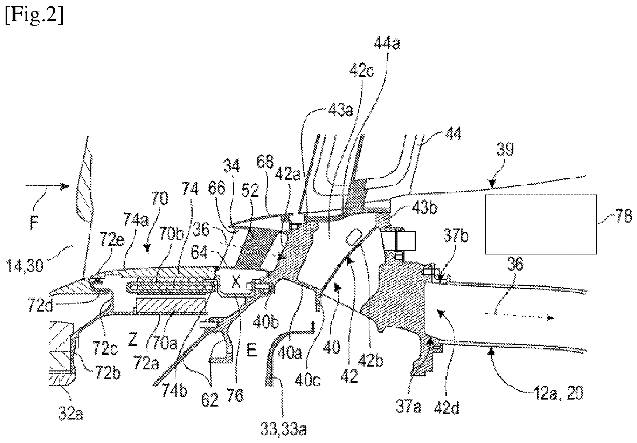

La figure 2 est une vue plus détaillée et à plus grande échelle d'une partie de la figure 1, et illustre un mode de réalisation d'une turbomachine selon l'invention.

Les éléments de la figure 2 qui ont déjà été décrits en référence à la figure 1 sont désignés par les mêmes références.

La figure 2 montre notamment la zone Z située entre le disque de soufflante 32a et le réducteur 33, dans laquelle une machine électrique 70 est installée. Seul un support 33a de la couronne du réducteur 33 est visible à la figure 2, cet élément étant par exemple relié au carter d'entrée 40 ou au support de palier 62.

La coupe du dessin de la figure 2 passe par un des IGV 52 qui peut être plein. Au moins un ou certains IGV 52 peuvent être tubulaires. La coupe passe par un OGV 44 ainsi que par un bras 42 qui est tubulaire pour le passage de servitudes, comme évoqué dans ce qui précède. Le IGV 52 tubulaire et/ou le bras 42 tubulaire pourrai(en)t être traversé(s) par des moyens de raccordement électrique qui seront décrits dans ce qui suit. Chaque bras 42 comprend à l'amont un bord 42a et à l'aval un bord 42d, respectivement d'attaque et de fuite du flux primaire 36.

Chaque bras 42 comprend une cavité interne 42c qui est fermée radialement à l'extérieur par une paroi 44a du OGV 44. Cette paroi 44a est formée d'une seule pièce avec le OGV 44 et est fixée sur des brides annulaires, respectivement amont 43a et aval 43b, du carter d'entrée 40. La cavité 42c est isolée des servitudes par la paroi 42b.

La cavité interne 42c de chaque bras 42 est fermée radialement à l'intérieur par une paroi annulaire 40a du carter d'entrée 40. A l'extrémité amont de cette paroi 40a, le carter d'entrée 40 comprend une bride annulaire 40b radialement interne de fixation du support de palier 62. A l'extrémité aval de la paroi 40a, le carter d'entrée 40 comprend une bride annulaire 40c radialement interne de fixation, par exemple de fixation d'une gouttière annulaire de récupération d'huile projetée par le réducteur 33 par centrifugation.

Le réducteur 33 ainsi que les paliers 46, 48, 50 visibles à la figure 1 sont situés dans une enceinte annulaire de lubrification E qui est fermée de manière étanche à l'amont par le support de palier 62 et au moins un joint d'étanchéité non visible, et à l'aval par le support de palier 60 et au moins un joint d'étanchéité non visible. La périphérie externe de l'enceinte E est fermée de manière étanche notamment par la paroi 40a.

La figure 2 permet de voir que l'enveloppe 37a évoquée dans ce qui précède est formée de plusieurs parois successives telles que la paroi 40a et une virole annulaire 64 située en amont de la paroi 40a et reliée à la périphérie interne des IGV 52.

L'enveloppe 37b est formée de plusieurs parois successives et notamment une virole annulaire 66 située en amont du carter d'entrée 40. Cette virole 66 s'étend autour de la virole 64 et est reliée à la périphérie externe des IGV 52.

L'enveloppe 39 est formée de plusieurs parois successives telles que la paroi 44a et une virole annulaire 68 située en amont de la paroi 44a. Cette virole 68 s'étend autour de la virole 66 et les extrémités amont des viroles 66, 68 sont reliées entre elles pour former le bec de séparation 34. Comme évoqué dans ce qui précède, la machine électrique 70 est située dans une zone annulaire Z, cette zone Z étant ici délimitée à l'amont par la soufflante 14, et en particulier le disque 32 de liaison des aubes de soufflantes 30 à l'arbre de soufflante 32, et à l'aval par le support de palier 62.

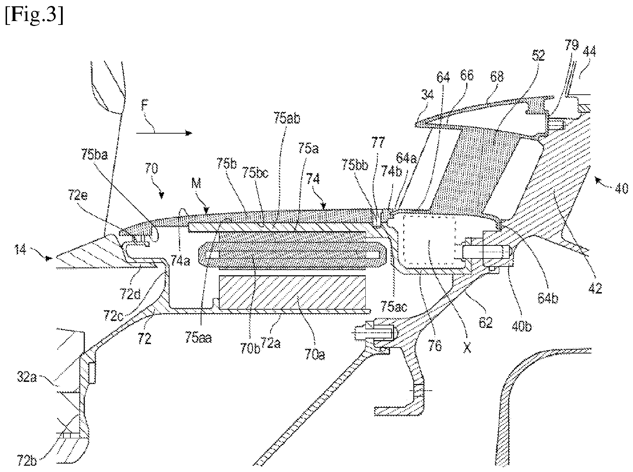

La machine 70, mieux visible à la figure 3, a une forme générale annulaire et comprend un rotor 70a et un stator 70b. Le rotor 70a a une forme générale annulaire s'étendant autour de l'axe A et est porté par un élément de support 72 qui a lui-même une forme générale annulaire.

Dans l'exemple représenté, l'élément de support 72 comprend une paroi cylindrique 72a entourée par le rotor 70a et fixée à la périphérie interne de ce dernier. L'extrémité amont de cette paroi 72a et reliée d'une part à une bride annulaire radialement interne 72b de fixation au disque de soufflante 32a, et d'autre part à un rebord annulaire externe 72c.

Le rebord 72c comprend une surface cylindrique interne 72d d'appui sur une surface cylindrique externe de la soufflante 14 afin d'assurer le centrage du rotor 70a. Le rebord 72c comprend en outre des léchettes annulaires externes 72e d'un joint d'étanchéité du type à labyrinthe.

Le stator 70b a également une forme générale annulaire et est porté par un élément annulaire de support 74 formé par l'assemblage de deux pièces annulaires et coaxiales. L'ensemble comprenant le stator 70b et son élément de support 74 forme un module électrique M au sens de l'invention.

L'élément 74 comprend :
- un support annulaire 75a qui entoure et recouvre au moins une partie du stator 70b et qui est fixé à la périphérie externe du stator, et
- un capot annulaire 75b qui entoure et recouvre au moins une partie du support 75a.

Le capot 75b comprend une surface 74a qui définit intérieurement la veine d'écoulement du flux de gaz F, entre la soufflante 14 et le bec de séparation 34. Cette surface 74a est ainsi balayée par le flux de gaz F. Une des particularités de cette installation réside dans le fait que la machine électrique 70 et en particulier son stator 70b est situé au plus près du flux principal F après traversée de la soufflante 14. Ceci permet d'une part de disposer d'une machine électrique à grand diamètre et donc à puissance potentielle supérieure aux technologies proposées jusqu'ici, et d'une machine qui est refroidie par le flux F. Avantageusement, les réjections thermiques de la machine électrique sont dissipées grâce à ce refroidissement.

Pour cela, la surface 74a balayée par le flux F a de préférence un profil aérodynamique, comme représenté dans le dessin. L'élément 74 assure l'échange de calories par conduction thermique entre le stator 70b et le flux F.

Le capot 75b comprend à son extrémité amont une surface cylindrique interne 75ba qui est par exemple revêtue d'une couche abradable, et qui coopère avec les léchettes 72e précitées.

L'extrémité aval du capot 75b est alignée axialement avec la virole 64 dont un bord périphérique amont 64a est engagé axialement dans une gorge annulaire 74b du capot 75b. Cette gorge 74b est orientée axialement vers l'aval. L'engagement du bord amont 64a de la virole 64 dans la gorge 74b assure un recouvrement et évite ainsi une marche dans la veine qui perturberait le flux F.

Au voisinage de son extrémité aval dans l'exemple représenté, le capot 75b comprend des orifices 75bb de montage de vis 77. Les orifices 75bb sont orientés sensiblement radialement par rapport à l'axe A et sont de préférence régulièrement réparties autour de cet axe.

Le capot 75b comprend en outre une surface cylindrique interne 75bc de montage ajustée sur une surface cylindrique externe 75aa du support 75a. Le capot 75b est destiné à être monté sur le support 75a par translation axiale et coulissement du capot sur le support, et plus particulièrement des surfaces 75bc, 75aa l'une sur l'autre, comme cela sera décrit plus en détail dans ce qui suit.

Le support 75a comprend une paroi cylindrique 75ab reliée à son extrémité aval à une bride annulaire 76 de fixation au support de palier 42 ou à la bride 40a du carter d'entrée 40.

La paroi 75ab comprend à son extrémité aval des trous borgnes 75ab qui sont taraudés et qui sont alignés avec les orifices 75bb en vue du passage et du vissage des vis 77.

La bride 76 a en section axiale une forme générale en U dont l'ouverture est orientée radialement vers l'extérieur. Dans l'exemple représenté, la bride 76 est fixée par des vis à une bride du support de palier 62 et à la bride 40b du carter d'entrée.

La bride 76 définit ainsi un espace annulaire X qui sert au raccordement électrique du stator 70b. L'espace X est délimité extérieurement par la virole 64. On comprend ainsi qu'en l'absence ou démontage de cette virole 64, on peut accéder à l'espace X.

Le stator 70b est relié par des moyens de raccordement électrique à un circuit électronique de puissance 78 qui est situé entre les deux enveloppes 37b, 39 et donc dans le générateur de gaz 12 (figure 2).

Les moyens de raccordement électrique du stator 70b au circuit 78 peuvent comprendre des harnais 82 et une ou plusieurs barres rigides 80 électroconductrices.

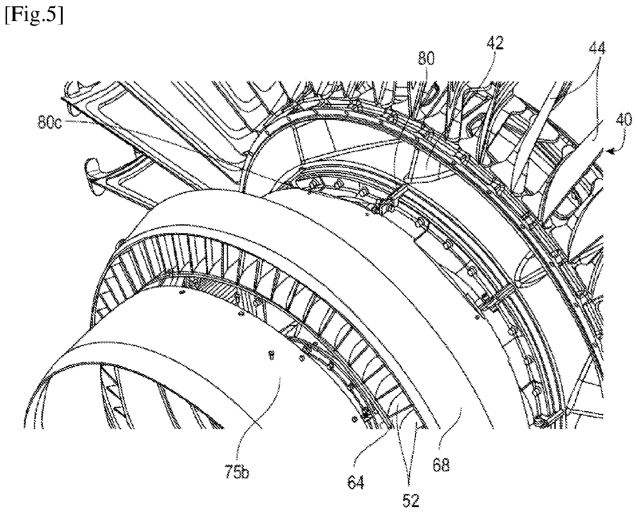

Dans un exemple préféré de réalisation de l'invention, le stator 70b est raccordé par un premier harnais électrique à une extrémité d'une barre 80 dont l'extrémité opposée est raccordée par un second harnais électrique au circuit 78. Dans ce cas, la section de l'âme 82a de chaque harnais 82 est de préférence identique ou proche de la section du corps 80a de la barre 80. La section de la barre 80 et en particulier de son corps 80a est de préférence constante sur toute la longueur de la barre. La figure 5 permet de voir une extrémité 80c de la barre 80 située dans l'espace X et destinée à être reliée au stator 70b par un harnais 82.

La figure 3 permet de voir que les viroles 64, 66 et 68 et les IGV 52 forment ici un ensemble annulaire monobloc qui est également visible à la figure 5. La virole 64 est ainsi solidaire des extrémités radialement internes des IGV 52. Son extrémité amont comprend le bord 64a engagé dans la gorge 74b, et son extrémité aval comprend un bord 64b en appui axial contre un épaulement cylindrique du carter d'entrée 40 ou de sa bride 40b.

La virole 66 est solidaire des extrémités radialement externes des IGV 52. Son extrémité amont est reliée à l'extrémité amont de la virole 68 pour former le bec de séparation 34, comme évoqué dans ce qui précède. Les extrémités aval des viroles 66, 68 sont également reliées ensemble pour former une bride annulaire 79 de fixation par des vis ou analogues sur le carter d'entrée 40.

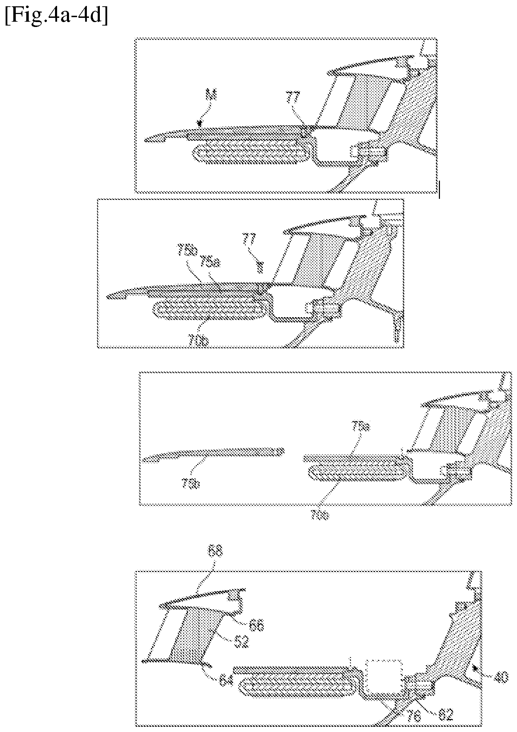

Les figures 4a à 4d et 5 illustrent des étapes d'un procédé de maintenance de la turbomachine 10.

Dans l'ordre représenté des étapes illustrées aux figures 4a à 4d, ces étapes permettent un démontage du module électrique M. On comprend qu'il suffit de répéter ces étapes dans l'ordre inverse pour réaliser un montage ou remontage du module

Préalablement aux étapes illustrées, le module de soufflante incluant la soufflante 14 et le rotor 75a de la machine électrique 70 est retiré par translation axiale vers l'amont.

A la première étape illustrée aux figures 4a et 4b, les vis 77 de fixation du capot 75b au support 75a sont dévissées et retirées. Ceci permet de désolidariser le capot 75b du support 75a.

Le capot 75b peut alors être retiré par translation axiale vers l'amont (figures 4c et 5).

L'ensemble formé par les viroles 64-68 et les IGV 52 est ensuite retiré par translation axiale vers l'amont (figures 4d et 5).

La prochaine étape non illustrée consiste alors à désolidariser la bride 76 du support de palier 62 et du carter d'entrée 40, afin de pouvoir retirer le module M dont le capot 75b a déjà été retiré.

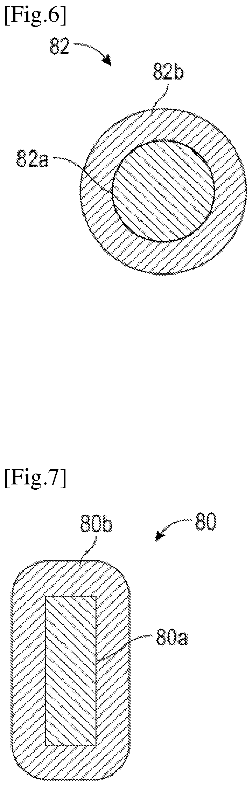

La figure 6 montre une coupe d'un harnais électrique 82 qui a en général une forme générale circulaire et comprend une âme 82a conductrice formée par un toron de câbles et une gaine externe 82b isolante. La figure 7 montre un exemple de réalisation d'une barre 80, qui comprend un corps conducteur 80a ayant de préférence une forme polygonale et par exemple rectangulaire en section. La barre 80 comprend en outre une gaine externe 80b isolante.

La présente invention permet de nombreux avantages :
- la barre 80 permet, à l'opposé d'un harnais, des rayons de cintrage très importants ; ce qui, dans l'environnement concerné, est primordial ; ceci permet de limiter l'épaisseur du bec de séparation 34 à une épaisseur proche de celle de la barre 80 ; de plus, le profil « vrillable » de la barre permet de s'adapter en fonction de la zone traversée : position radiale (dans le plan P1) pour entrer dans le IGV 52 ou le bras de carter, et position axiale (dans le plan P2) pour traverser le carter d'entrée 40 au niveau d'un OGV 44 ;
- la barre 80 est rigide, il n'y a donc pas de risque de vibrations dues à une trop grande souplesse donc pas besoin de maintien spécifique dans les bras du carter d'entrée 40 ;
- le cheminement décrit plus haut est compatible de toutes les servitudes huile circulant dans les bras du carter d'entrée 40 ; de plus, les parois du carter d'entrée 40, et en particulier les parois 40a et 42b, isolent la barre 80 de ces servitudes huiles, ce qui limite le risque de feu ; et
- la modularité liée à la facilité de montage/démontage de la barre 80 en enlevant seulement quelques pièces de la turbomachine.

Cette invention pourrait être appliquée à toute turbomachine équipée d'une machine électrique en amont d'un carter structural du type carter d'entrée ou autre.

## Revendications

1. Module électrique (M) pour une turbomachine (10) d'aéronef, ce module comportant :
- un stator (70b) de machine électrique (70), ce stator ayant une forme annulaire autour d'un axe (A) et étant destiné à entourer un rotor (70a) de la machine électrique,
- un élément annulaire de support (74) dudit stator, cet élément comportant une surface annulaire externe (74a) configurée pour être balayée par un flux de gaz (F) de la turbomachine, en vue du refroidissement par conduction du stator,
**caractérisé en ce que** ledit élément annulaire (74) comprend :
- un support annulaire (75a) qui entoure et recouvre au moins une partie dudit stator et qui est fixé à la périphérie externe du stator, ce support comprenant au moins une bride (76) de fixation à un organe de la turbomachine, cette bride étant située à l'extrémité aval du stator, et
- un capot annulaire (75b) qui entoure et recouvre au moins une partie dudit support (75a) et qui comprend ladite surface (74a) balayée par le flux de gaz (F).

2. Module (M) selon la revendication 1, dans lequel le support (75a) comprend une paroi cylindrique (75ab) recouvrant le stator (70b) et reliée par son extrémité aval à ladite bride (76) qui a en section une forme générale en U pour définir un espace annulaire (X) de raccordement électrique dudit stator.

3. Module (M) selon la revendication 1 ou 2, dans lequel le capot (75b) comprend à une extrémité amont une surface cylindrique interne (75ba) configurée pour coopérer avec des léchettes annulaires (72e) d'un joint d'étanchéité à labyrinthe.

4. Module (M) selon l'une des revendications précédentes, dans lequel ladite surface (74a) balayée par le flux de gaz (F) s'étend sur toute l'étendue longitudinale dudit capot (75b).

5. Module (M) selon l'une des revendications précédentes, dans lequel le capot (75b) comprend des orifices (75bb) orientés sensiblement radialement par rapport à l'axe (A), ces orifices étant alignés avec des trous (75ac) taraudés formés dans le support (75a), des vis (77) étant configurées pour être vissées dans les orifices (75bb) et les trous (75ac) en vue de la fixation du capot au support.

6. Module (M) selon l'une des revendications précédentes, dans lequel le capot (75b) comprend à son extrémité aval une gorge annulaire (74b) orientée axialement vers l'aval, en vue de la réception d'un bord périphérique (64a) d'un autre organe de la turbomachine.

7. Turbomachine (10) d'aéronef, comportant :
- un générateur de gaz (12) ayant un axe longitudinal (A),
- une soufflante (14) située à une extrémité amont du générateur de gaz et configurée pour tourner autour dudit axe, et
- une machine électrique (70) de forme générale annulaire qui est montée coaxialement en aval de la soufflante, et qui comprend un rotor (70a) couplé en rotation à la soufflante, et un module (M) selon l'une des revendications précédentes,
la soufflante étant configurée pour générer un flux principal de gaz (F) dont une partie s'écoule dans une veine annulaire primaire du générateur de gaz pour former un flux primaire (36), et dont une autre partie s'écoule dans une veine annulaire secondaire s'étendant entre le générateur de gaz et le carter de nacelle pour former un flux secondaire (38),
la veine primaire étant délimitée par une première et une deuxième enveloppes annulaires (37a, 37b) coaxiales du générateur de gaz, la veine primaire étant traversée par des bras, appelés IGV (52), de liaison des première et deuxième enveloppes, ainsi que par des bras tubulaires (42) d'un carter d'entrée situé en aval des IGV,
le générateur de gaz comportant une troisième enveloppe annulaire (39) qui entoure coaxialement la deuxième enveloppe,
les deuxième et troisième enveloppes (37b, 39) étant reliées ensemble à leurs extrémités amont pour former un bec annulaire (34) de séparation des flux primaire et secondaire (36, 38).

8. Turbomachine (10) selon la revendication 7, dans laquelle les IGV (52) sont formés d'une seule pièce avec des portions annulaires des première, deuxième et troisième enveloppes (37a, 37b, 39), cet ensemble étant configuré pour être fixé audit carter d'entrée (40).

9. Turbomachine (10) selon la revendication 7 ou 8, dans laquelle ledit ensemble comprend à sa périphérie externe une bride annulaire (79) de fixation au carter d'entrée (40), et à sa périphérie interne des bords annulaires, respectivement amont (64a) et aval (64b), d'appui et/ou d'engagement.

10. Turbomachine (10) selon l'une des revendications 7 à 9, dans laquelle la machine électrique (70) et le carter d'entrée (40) sont fixés à un support annulaire de palier (62) du générateur de gaz (12), ladite bride (76) étant appliquée et fixée sur le support de palier et/ou sur le carter.

11. Turbomachine selon l'une des revendications 7 à 10, dans laquelle elle comprend un carter de nacelle (16) qui entoure le générateur de gaz (12), ainsi que des aubages, appelés OGV (44), de liaison du carter de nacelle à ladite troisième enveloppe annulaire (39).

12. Procédé de maintenance d'une turbomachine (10) selon l'une des revendications 8 à 10, comprenant les étapes consistant à :
- démonter et retirer le rotor (70a) de la machine électrique (70),
- démonter et retirer ledit capot (75b) du reste du module électrique (70),
- démonter et retirer ledit ensemble (37a, 37b, 39, 52),
- démonter et retirer le reste du module électrique.

## Patentansprüche

1. Elektrisches Modul (M) für eine Turbomaschine (10) eines Luftfahrzeugs, wobei dieses Modul aufweist:
- einen Stator (70b) einer elektrischen Maschine (70), wobei dieser Stator eine ringförmige Form um eine Achse (A) aufweist und dazu bestimmt ist, einen Rotor (70a) der elektrischen Maschine zu umgeben,
- ein ringförmiges Trägerelement (74) des Stators, wobei dieses Element eine äußere ringförmige Oberfläche (74a) aufweist, die konfiguriert ist, um von einem Gasstrom (F) der Turbomaschine überstrichen zu werden, zur Kühlung durch Leitung des Stators, **dadurch gekennzeichnet, dass** das ringförmige Element (74) umfasst:
- einen ringförmigen Träger (75a), der mindestens einen Teil des Stators umgibt und bedeckt und der am äußeren Umfang des Stators befestigt ist, wobei dieser Träger mindestens einen Flansch (76) zur Befestigung an einem Organ der Turbomaschine umfasst, wobei sich dieser Flansch am stromabwärtigen Ende des Stators befindet, und
- eine ringförmige Haube (75b), die mindestens einen Teil des Trägers (75a) umgibt und bedeckt und die die Oberfläche (74a) umfasst, die von dem Gasstrom (F) überstrichen wird.

2. Modul (M) nach Anspruch 1, wobei der Träger (75a) eine zylindrische Wand (75ab) umfasst, die den Stator (70b) bedeckt und durch ihr stromabwärtiges Ende mit dem Flansch (76) verbunden ist, der im Querschnitt eine allgemeine U-Form aufweist, um einen ringförmigen Raum (X) für den elektrischen Anschluss des Stators zu definieren.

3. Modul (M) nach Anspruch 1 oder 2, wobei die Haube (75b) an einem stromaufwärtigen Ende eine zylindrische innere Oberfläche (75ba) umfasst, die konfiguriert ist, um mit ringförmigen Lippen (72e) einer Labyrinthdichtung zusammenzuwirken.

4. Modul (M) nach einem der vorstehenden Ansprüche, wobei sich die von dem Gasstrom (F) überstrichene Oberfläche (74a) über die gesamte längliche Ausdehnung der Haube (75b) erstreckt.

5. Modul (M) nach einem der vorstehenden Ansprüche, wobei die Haube (75b) Öffnungen (75bb) umfasst, die im Wesentlichen radial zur Achse (A) gerichtet sind, wobei diese Öffnungen mit im Träger (75a) gebildeten Gewindelöchern (75ac) ausgerichtet sind, wobei Schrauben (77) konfiguriert sind, um in die Öffnungen (75bb) und die Löchern (75ac) zur Befestigung der Haube am Träger eingeschraubt zu werden.

6. Modul (M) nach einem der vorstehenden Ansprüche, wobei die Haube (75b) an ihrem stromabwärtigen Ende eine axial stromabwärts gerichtete ringförmige Nut (74b) zur Aufnahme eines peripheren Randes (64a) eines weiteren Organs der Turbomaschine umfasst.

7. Turbomaschine (10) eines Luftfahrzeugs, die aufweist:
- einen Gasgenerator (12), der eine Längsachse (A) aufweist,
- ein Gebläse (14), das sich an einem stromaufwärtigen Ende des Gasgenerators befindet und zum Drehen um die Achse konfiguriert ist, und
- eine allgemein ringförmige elektrische Maschine (70), die koaxial stromabwärts des Gebläses angebracht ist und die einen Rotor (70a), der mit dem Gebläse drehgekoppelt ist, und ein Modul (M) nach einem der vorstehenden Ansprüche umfasst,
wobei das Gebläse konfiguriert ist, um einen Hauptgasstrom (F) zu erzeugen, von dem ein Teil in einen ringförmigen Primärstrom des Gasgenerators strömt, um einen Primärstrom (36) zu bilden, und von dem ein anderer Teil in einen ringförmigen Sekundärstrom strömt, der sich zwischen dem Gasgenerator und dem Gondelgehäuse erstreckt, um einen Sekundärstrom (38) zu bilden,
wobei der Primärstrom durch eine erste und eine zweite ringförmige Hülle (37a, 37b) begrenzt ist, die koaxial zum Gasgenerator sind, wobei der Primärstrom von Armen, als IGV (52) bezeichnet, zur Verbindung der ersten und der zweiten Hülle sowie von rohrförmigen Armen (42) eines Eingangsgehäuses, das sich stromabwärts der IGV befindet, durchquert wird,
wobei der Gasgenerator eine dritte ringförmige Hülle (39) aufweist, die die zweite Hülle koaxial umgibt,
wobei die zweite und dritte Hülle (37b, 39) an ihren stromaufwärtigen Enden miteinander verbunden sind, um einen ringförmigen Schnabel (34) zur Trennung des Primär- und Sekundärstroms (36, 38) zu bilden.

8. Turbomaschine (10) nach Anspruch 7, wobei die IGV (52) einstückig mit ringförmigen Abschnitten der ersten, zweiten und dritten Hülle (37a, 37b, 39) gebildet sind, wobei diese Einheit konfiguriert ist, um an dem Eingangsgehäuse (40) befestigt zu werden.

9. Turbomaschine (10) nach Anspruch 7 oder 8, wobei die Einheit an ihrem äußeren Umfang einen ringförmigen Flansch (79) zur Befestigung am Eingangsgehäuse (40) und an ihrem inneren Umfang ringförmige Ränder, jeweils stromaufwärts (64a) und stromabwärts (64b), zur Auflage und/oder zum Eingriff umfasst.

10. Turbomaschine (10) nach einem der Ansprüche 7 bis 9, wobei die elektrische Maschine (70) und das Eingangsgehäuse (40) an einem ringförmigen Lagerträger (62) des Gasgenerators (12) befestigt sind, wobei der Flansch (76) auf den Lagerträger und/oder das Gehäuse aufgebracht und daran befestigt ist.

11. Turbomaschine nach einem der Ansprüche 7 bis 10, wobei sie ein Gondelgehäuse (16) umfasst, das den Gasgenerator (12) umgibt, sowie Schaufeln, als OGV (44) bezeichnet, zur Verbindung des Gondelgehäuses mit der dritten ringförmigen Hülle (39).

12. Verfahren zur Wartung einer Turbomaschine (10) nach einem der Ansprüche 8 bis 10, umfassend die Schritte, die bestehen aus:
- Ausbauen und Entnehmen des Rotors (70a) von der elektrischen Maschine (70),
- Ausbauen und Entnehmen der Haube (75b) vom Rest des elektrischen Moduls (70),
- Ausbauen und Entnehmen der Einheit (37a, 37b, 39, 52),
- Ausbauen und Entnehmen des Rests des elektrischen Moduls.

## Claims

1. An electric module (M) for an aircraft turbomachine (10), this module comprising:
- a stator (70b) of an electric machine (70), said stator having an annular shape about an axis (A) and being intended to surround a rotor (70a) of the electric machine,
- an annular support element (74) for said stator, said element comprising an external annular surface (74a) configured to be swept by a gas flow (F) from the turbomachine, in order to cool the stator by conduction, **characterised in that** said annular element (74) comprises:
- an annular support (75a) which surrounds and covers at least one portion of said stator and which is attached to the external periphery of the stator, this support comprising at least one flange (76) for attaching to a member of the turbomachine, this flange being located at the downstream end of the stator, and
- an annular cover (75b) which surrounds and covers at least one portion of said support (75a) and which comprises said surface (74a) swept by the gas flow (F).

2. The module (M) according to claim 1, wherein the support (75a) comprises a cylindrical wall (75ab) covering the stator (70b) and connected by its downstream end to said flange (76) which is generally U-shaped in cross-section to define an annular space (X) for electrical connection of said stator.

3. The module (M) of claim 1 or 2, wherein the cover (75b) comprises at an upstream end an internal cylindrical surface (75ba) configured to cooperate with annular wipers (72e) of a labyrinth seal.

4. The module (M) according to any of the preceding claims, wherein said surface (74a) swept by the gas flow (F) extends over the entire longitudinal extent of said cover (75b).

5. The module (M) according to any of the preceding claims, wherein the cover (75b) comprises orifices (75bb) oriented substantially radially with respect to the axis (A), these orifices being aligned with threaded holes (75ac) formed in the support (75a), screws (77) being configured to be screwed into the orifices (75bb) and the holes (75ac) in order to secure the cover to the support.

6. The module (M) according to one of the preceding claims, wherein the cover (75b) comprises at its downstream end an annular groove (74b) oriented axially downstream, in order to receive a peripheral edge (64a) of another member of the turbomachine.

7. An aircraft turbomachine (10), comprising:
- a gas generator (12) having a longitudinal axis (A),
- a fan (14) located at an upstream end of the gas generator and configured to rotate about said axis, and
- an electric machine (70) with a generally annular shape which is mounted coaxially downstream of the fan, and which comprises a rotor (70a) rotatably coupled to the fan, and a module (M) according to one of the preceding claims,
the fan being configured to generate a main gas flow (F), a portion of which flows in a primary annular duct of the gas generator to form a primary flow (36), and another portion of which flows in a secondary annular duct extending between the gas generator and the nacelle casing to form a secondary flow (38),
the primary duct being delimited by a first and a second annular envelopes (37a, 37b) coaxial with the gas generator, the primary duct being traversed by arms, referred to as IGV (52), for connecting the first and second envelopes, as well as by tubular arms (42) of an inlet casing located downstream of the IGV,
the gas generator comprising a third annular envelope (39) which coaxially surrounds the second envelope,
the second and third envelopes (37b, 39) being connected together at their upstream ends to form an annular splitter nose (34) for separating the primary and secondary flows (36, 38).

8. The turbomachine (10) of claim 7, wherein the IGV (52) are integrally formed with annular segments of the first, second, and third envelopes (37a, 37b, 39), this assembly being configured to be attached to said inlet casing (40).

9. The turbomachine (10) according to claim 7 or 8, wherein said assembly comprises at its external periphery an annular flange (79) for attachment to the inlet casing (40), and at its internal periphery, annular edges, respectively upstream (64a) and downstream (64b), for support and/or engagement.

10. The turbomachine (10) according to any of claims 7 to 9, wherein the electric machine (70) and the inlet casing (40) are attached to an annular bearing support (62) of the gas generator (12), said flange (76) being applied to and attached to the bearing support and/or to the casing.

11. The turbomachine according to any of claims 7 to 10, wherein it comprises a nacelle casing (16) that surrounds the gas generator (12), as well as bladings, referred to as OGV (44), for connecting the nacelle casing to said third annular envelope (39).

12. A method for maintaining a turbomachine (10) according to any of claims 8 to 10, comprising the steps consisting in:
- disassembling and removing the rotor (70a) from the electric machine (70),
- disassembling and removing said cover (75b) from the rest of the electric module (70),
- disassembling and removing said assembly (37a, 37b, 39, 52),
- disassembling and removing the rest of the electric module.
